# EUROPEAN PATENT APPLICATION

(11) **EP 2 181 688 A1**
(43) Date of publication of application: **05.05.2010**
(21) Application number: 08162046.0
(22) Date of filing: 08.08.2008
(51) Int. Cl.: A61J 9/02

(54) **Baby feeding bottle with temperature indicator**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

The present invention provides a food container, such as a baby feeding bottle, comprising: a hollow vessel (2) comprising an integral side wall (4), an end wall (6) and being open at the other end; a thermometer (16) disposed on the side wall, said thermometer having temperature indications (18) in a selected temperature range around a target temperature (e.g.37° C). The temperature indications of the selected temperature range are arranged on a non-linear scale, having the highest accuracy in a first range (50) around the target temperature, and having a lower accuracy in a second range (52) below and in a third range (54) above the target temperature.

## Description

### FIELD OF THE INVENTION

The present invention relates to a food container, such as a baby feeding bottle, with a temperature indicator. The invention relates particularly to the manner in which the temperature of a liquid within the container is determined.

### BACKGROUND OF THE INVENTION

Based upon the fact that the temperature of mother's milk is approximately 37° C., it has been recognized that milk/formula given to the unweaned should be at approximately this temperature. Liquid above or below this temperature may be rejected by the baby. If the liquid is accepted and is too hot, the baby's lips and mouth may be burned. If the liquid is too cold, it may bring a case of indigestion.

In the past, the most common method for determining the temperature of the liquid was simply the tactile feeling of the fingertip or the hand palm of a person having access to the feeding bottle. The determination was therefore often reliable as it simply depended upon the thermal feeling of a particular person having access to the feeding bottle and furthermore was not free from the influences of atmospheric or room temperature.

Quantitative temperature indicators display the temperature of the bottle contents. These are often digital devices which are not integrated with the bottle, because they cannot withstand common bottle use like heating, cleaning and sterilising. Quantitative temperature indicators that are not digital are glass bulb thermometers or thermochromatic strips with a temperature range.

Other feeding bottles are provided with qualitative temperature indicators that indicate when the contents of the bottle are too hot, too cold or when the contents are 'OK'. These baby feeding bottles are unsatisfactory, as the caregiver wants to know the temperature of the contents. Caregivers want to know the temperature of the feed, so that they can decide if it is safe to feed their babies. Caregivers may define their own personal temperature range for feeding the baby. Some caregivers will find that the feed should be between 30 and 37°C, while others prefer a range of 35 to 37°C. These values may vary depending on the age of the baby. Newborns tend to be more sensitive to the temperature of their feed than older babies.

According to US-4878588, some early temperature indicator means for baby feeding bottles involved the use of liquid bulb-type thermometers attached, by various methods, to the feeding bottle. With respect to using liquid bulb-type thermometers there is the obvious breakage resulting from the fact that the bottle is being used by an infant and thus might be dropped or the bottle misused by the infant, thus possibly leading to cuts or poisoning. Furthermore, the predominant use of dishwashers and microwave ovens has effectively eliminated the ability to use liquid bulb-type thermometers in baby bottles.

Other prior art included a baby feeding bottle with a thermometer attached to either the inside or outside of the wall of the baby bottle. Disadvantages of this device include the fact that by virtue of being a separate unit, the thermometer might be broken away, misplaced or damaged through normal misuse by the handler. These problems may be amplified if the thermometer is attached to the inner wall because the damaged bottle/thermometer may be used without even suspecting that it might be damaged. Using a damaged indicator unit could cause unintentional harm to the baby (liquid served in the bottle being too hot or too cold).

US-4878588 provides a baby feeding bottle having a side wall with a sealed elongated chamber formed therein. The elongated chamber has a commercially available liquid crystal-type strip thermometer disposed therein having temperature indications in a selected temperature range around 37° C. However, the liquid crystal strip thermometer is either inaccurate compared to the glass bulb thermometer, or requires more display space.

Given the desire of caregivers to know the temperature of the contents of the feeding bottle more accurately, there exists a need for a more precise temperature indication. However, due to the above problems related to the prior art, taken in combination with aspects of costs, user-friendlyness, and limited space, the prior art lacks a satisfying solution. These same problems also relate to other types of food containers, such as pots and pans.

### OBJECT OF THE INVENTION

The present invention aims to provide a food container with a more accurate temperature indication.

### SUMMARY OF THE INVENTION

The present invention therefore provides a food container, comprising:
- a hollow vessel comprising an integral side wall, an end wall and being open at the other end;
- a thermometer disposed on the side wall, said thermometer having temperature indications in a selected temperature range around a target temperature;
- wherein the temperature indications of the selected temperature range are arranged on a non-linear scale, having the highest accuracy in a first range around the target temperature, and having a lower accuracy in a second range below the target temperature and in a third range above the target temperature.

Prior art temperature indicators that indicate the temperature within a specific range have a linear scale and constant sensitivity. The sensitivity around the target temperature, e.g. 37° C, may be too inaccurate, whereas the sensitivity around other temperatures, e.g. 20° C or 45° C, may be more accurate than necessary. The thermometer of the invention indicates the temperature with the required accuracy. The temperature of the contents of the container will be indicated relatively accurate around a specific temperature (for example 37°C) and less accurate around other temperatures (for example 20°C). The container of the invention overcomes the disadvantages of existing temperature indicating systems. It is accurate when necessary and less accurate otherwise. The bottle is more efficient than prior art bottles. The bottle provides accurate temperature information, while limiting costs and being reliable where necessary within a limited area.

The container of the invention measures and indicates the temperature of its contents more efficiently than prior art devices. By using a number of temperature measuring means that have varying sensitivities that correspond with the desired accuracy in a specific temperature range, the accuracy is satisfactory in every temperature range. In addition, this efficient method of measuring and indicating temperature allows faster reading of the temperature indicator.

Airplanes include indicators having a variable line resolution scale for indicating information such as altitude, pitch angle, degrees above or below the horizon, etc. However, the information is only correctly displayed on the variable lines of such indicators due to an elaborate data processing system. Such elaborate systems are unsuitable (too extensive and vulnerable) for use with a food container. Also, the variable line resolution is incompatible with the preferred strip thermometer having temperature indications of equal dimension.

In an embodiment, the food container is a baby feeding bottle, and the target temperature is about 37° C. Thus the invention provides a feeding bottle having all the above improvements over the prior art.

Other features and advantages will be apparent from the enclosed drawings.

### BRIEF DESCRIPTION OF THE DRAWINGS

Fig. 1 shows an embodiment of a baby feeding bottle according to the invention;
Fig. 2 shows a prior art glass bulb thermometer;
Fig. 3 shows a prior art liquid crystal strip thermometer;
Fig. 4 shows an embodiment of a thermometer for a baby bottle according to the invention.

### DETAILED DESCRIPTION OF EXAMPLES

A food container of the invention, for instance baby feeding bottle 1, comprising a hollow vessel 2 constituted by an integral side wall 4 and bottom end wall 6. The end of the vessel 2 opposite the end wall 6 is provided with a threading (not shown) to allow for usage and interchangeability of a cap 8 with nipple 10. The cylindrical wall 4 and the end wall 6 define an inner space 12 for containing (liquid) food 14, such as mother's milk.

The bottle 1 is provided with a thermometer 16 having several temperature indications 18. To protect the thermometer 16 it maybe integrated within the side wall 4, for instance in a recess thereof or being covered by a (plastic) covering.

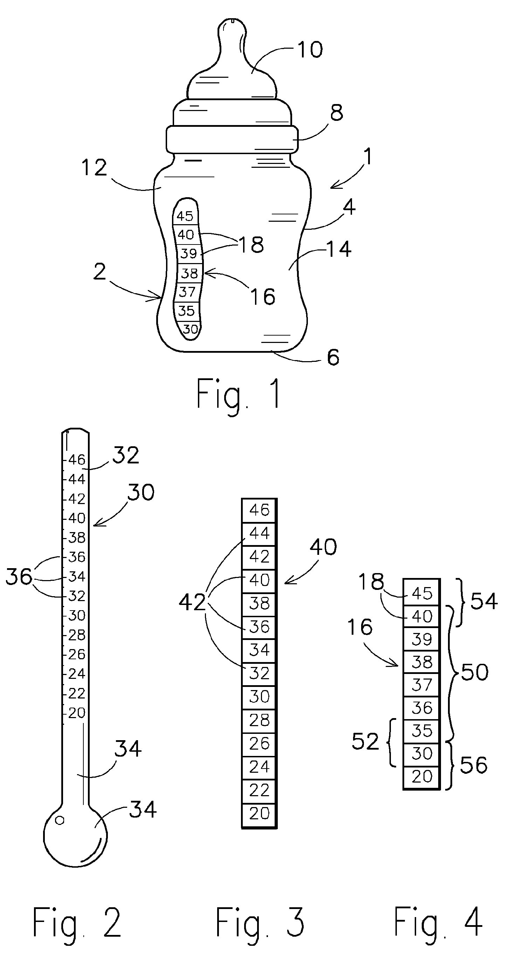

Figures 2 to 4 demonstrate the difference between the prior art linear scale temperature indicators (Figs. 2, 3) and the temperature indicator of the present invention (Fig. 4). A temperature of 21,5°C is indicated on a scale with temperature range between 20 and 45.

Fig. 2 shows a glass bulb thermometer 30, including a glass bulb 32 filled with a liquid 34 that expands substantially linear within a certain temperature range. The glass bulb is provided with linear temperature indications 36, i.e. all consecutive temperature indications have the same relative temperature difference. The accuracy of the glass bulb thermometer 30 is relatively high, which however requires a lot of display space.

A liquid crystal strip thermometer 40 (Fig. 4) has separate temperature indications 42. The scale of the strip is linear, i.e. all consecutive temperature indications indicate the same relative temperature difference. The linear scale however is either inaccurate around the target temperature or requires a lot of display space for all of its separate temperature indications. As an example, the temperature indications 42 each indicate a certain temperature, with a relative increment is 2° C. For the shown range of 20 to 45° C, this requires 14 display boxes.

Fig. 4 shows a thermometer strip 16 of the present invention, having temperature indications 18. The temperature indication within a first temperature range 50, second temperature range 52, third temperature range 54, and fourth temperature range 56 all have a different accuracy. The thermometer strip 16 of the present invention has a non-linear sensitivity, providing more useful information in less space. Less, for instance only 9, display boxes are required to cover a temperature range of 20 to 45 C, whereas the accuracy of the temperature indication around the target temperature 37° is higher than the strip of Fig. 3.

In a practical embodiment, the accuracy in the first range is more accurate than 2° C per temperature indication, i.e. the difference between two consecutive temperature indications is less than 2° C. The accuracy in the first range is for instance equal to or better than 1° C per temperature indication. The accuracy in the second and/or the third range is for instance less than 2° C per temperature indication. The accuracy in the second and/or the third range is for stance equal to or less than 5° C per temperature indication.

Optionally, the non-linear scale includes a fourth range and a fifth range having a lower accuracy than the second and the third range, the fourth range being below the second range and the firth range being above the third range. The accuracy of the fourth and/or the firth range is for instance below 5° C per indication. The accuracy of the fourth and/or the firth range may be in the order of 10° C per indication.

The first temperature range includes for instance about 34° C to about 40° C. The second temperature range includes for instance about 20° C to about 34° C or 35° C. The third temperature range includes for instance about 40° C to about 50° C.

In practice, the thermometer can be a liquid crystal strip thermometer, which can be relatively cheap, shock resistant, and/or dishwasher proof.

Optionally, the thermometer can comprise a strip having temperature indications including thermo chromatic material and/or leuco dyes. A leuco dye is a dye whose molecules can acquire two forms, one of which is colorless and the other one being colored. After protonating a part of the molecule, irradiation with UV light, or introducing other kind of such change, the molecules of the leaco dye can adapt a conjugated form, with ability to absorb photons of visible light, and therefore appear colorful. Leuco dyes are a key component of some thermochromic dyes.

The present invention as described above provides a cheap and robust way of relatively accurately indicating the temperature of the contents of a container, within the limited available space.

The invention is not limited to the above described embodiments thereof, and features of different embodiments can be combined. Many other modifications are conceivable within the scope of the appended claims.

## Claims

1. Food container, comprising:
- a hollow vessel (2) comprising an integral side wall (4), an end wall (6) and being open at the other end;
- a thermometer (16) disposed on the side wall, said thermometer having temperature indications (18) in a selected temperature range around a target temperature;
- wherein the temperature indications of the selected temperature range are arranged on a non-linear scale, having the highest accuracy in a first range (50) around the target temperature, and having a lower accuracy in a second range (52) below the target temperature and in a third range (54) above the target temperature.

2. The container of claim 1, wherein the accuracy in the first range is more accurate than 2° C per temperature indication.

3. The container of claim 2, wherein the accuracy in the first range is equal to or better than 1° C per temperature indication.

4. The container of any of the previous claims, wherein the accuracy in the second and/or the third range is less than 2° C per temperature indication.

5. The container of claim 4, wherein the accuracy in the second and/or the third range is equal to or less than 5° C per temperature indication.

6. The container of any of the previous claims, wherein the non-linear scale includes a fourth range (56) and a fifth range having a lower accuracy than the second and the third range, the fourth range being below the second range and the firth range being above the third range.

7. The container of claim 6, the accuracy of the fourth and/or the firth range being below 5° C per indication.

8. The container of claim 6, the accuracy of the fourth and/or the firth range being in the order of 10° C per indication.

9. The container of any of the previous claims, wherein the food container is a baby feeding bottle (1), and wherein the target temperature is about 37° C.

10. The container of any of the previous claims, wherein the first temperature range (50) includes about 34° C to about 40° C.

11. The container of any of the previous claims, wherein the second temperature range (52) includes about 20° C to about 34° C or 35° C.

12. The container of any of the previous claims, wherein the third temperature range (54) includes about 40° C to about 50° C.

13. The container of any of the previous claims, wherein the thermometer (16) is a liquid crystal strip thermometer.

14. The container of any of the previous claims, wherein the thermometer (16) is a strip comprising thermo chromatic material and/or leuco dyes.
